# EUROPEAN PATENT SPECIFICATION

(11) **EP 1 165 946 B1**
(45) Date of publication and mention of the grant of the patent: **12.10.2005**
(21) Application number: 99957513.7
(22) Date of filing: 04.11.1999
(51) Int. Cl.: F01N 3/035, B01J 21/06, B01J 23/10, B01J 23/40, B01D 53/94

(54) **CATALYST AND METHOD FOR REDUCING EXHAUST GAS EMISSIONS**
KATALYSATOR UND VERFAHREN ZUR REDUZIERUNG DER ABGASEMISSIONEN
CATALYSEUR ET PROCEDE DE REDUCTION DES EMISSIONS DE GAZ D'ECHAPPEMENT

(30) Priority: 13.11.1998 US 191603
(43) Date of publication of application: 02.01.2002
(73) Proprietor: ENGELHARD CORPORATION, Iselin, NJ 08830-0770 (US)
(72) Inventor: VOSS, Kenneth, E., Somerville, NJ 08876 (US); ROTH, Stanley, Yardley, PA 19067 (US); DETTLING, Joseph, C., Howell, NJ 07731 (US); RICE, Gary, W., Scotch Plains, NJ 07076 (US); LUI, Yiu, Kwan, Parlin, NJ 08859 (US); YASSINE, Mahmoud, Edison, NJ 08820 (US)
(74) Representative: Fisher, Adrian John
(86) International application number: PCT/US1999/026037
(87) International publication number: WO 2000/029726

(56) References cited:
- DE-A- 3 337 903
- US-A- 4 927 799
- US-A- 5 053 378
- US-A- 5 753 580
- DATABASE WPI Section Ch, Week 198846 Derwent Publications Ltd., London, GB; Class J01, AN 1988-327483 XP002900912 & JP 63 242324 A (RIKEN CORP), 7 October 1988 (1988-10-07)
- DATABASE WPI Section Ch, Week 198235 Derwent Publications Ltd., London, GB; Class E19, AN 1982-72931E XP002900913 & JP 57 117326 A (TOYOTA JIDOSHA KK), 21 April 1982 (1982-04-21)
- DATABASE WPI Section Ch, Week 198705 Derwent Publications Ltd., London, GB; Class H06, AN 1987-031775 XP002900914 & JP 61 286513 A (CATALER KOGYO KK), 17 December 1986 (1986-12-17)
- DATABASE WPI Section PQ, Week 199744 Derwent Publications Ltd., London, GB; Class Q51, AN 1997-475902 XP002900915 & JP 09 222009 A (NIPPON JIDOSHA BUHIN SOGO), 26 August 1997 (1997-08-26)
- DATABASE WPI Section Ch, Week 199722 Derwent Publications Ltd., London, GB; Class E36, AN 1997-242886 XP002900916 & JP 09 079024 A (TOYOTA JIDOSHA KK), 25 March 1997 (1997-03-25)

## Description

### Field Of The Invention

This invention relates to an apparatus comprising a catalytic element in communication with a catalyzed filter element, for the oxidation of oxidizable components of a gas-borne stream, e.g., for treatment of diesel engine exhaust, and more specifically to the treatment of such diesel exhaust to reduce the particulates content thereof. Where the catalyzed element and catalyzed filter are located in an exhaust stream of a diesel engine with the catalyzed element located between the engine and the catalyzed filter element.

### Background and Related Art

As is well-known, gas-borne streams from industrial processes or engine exhausts often contain oxidizable pollutants such as unburned fuel and vaporized or condensed oils. For example, diesel engine exhaust contains not only gaseous pollutants such as carbon monoxide ("CO") and unburned hydrocarbons ("HC"), but also soot particles which, as described in more detail below, comprise both a dry carbonaceous fraction and a hydrocarbon liquid which is sometimes referred to as a volatile organic fraction ("VOF"), which terminology will be used herein, or a soluble organic fraction. Accordingly, although sometimes loosely referred to as an "exhaust gas", the exhaust of a diesel engine is actually a heterogeneous material, comprising gaseous, liquid and solid components. The VOF may exist in diesel exhaust either as a vapor or as an aerosol (fine droplets of liquid condensate) depending on the temperature of the diesel exhaust.

Oxidation catalysts comprising a platinum group metal dispersed on a refractory metal oxide support are known for use in treating the exhaust of diesel engines in order to convert both HC and CO gaseous pollutants and particulates, i.e., soot particles, by catalyzing the oxidation of these pollutants to carbon dioxide and water. One problem faced in the treatment of diesel engine exhaust is presented by the presence of sulfur in diesel fuel. Upon combustion, sulfur forms sulfur dioxide and the oxidation catalyst catalyzes the SO₂ to SO₃ ("sulfates") with subsequent formation of condensable sulfur compounds, such as sulfuric acid, which condense upon, and thereby add to, the mass of particulates. The sulfates also react with activated alumina supports to form aluminum sulfates, which render activated alumina-containing catalysts inactive. In this regard, see U.S. Patent 4,171,289 at column 1, line 39 et seq. Previous attempts to deal with the sulfation problem include the incorporation of large amounts of sulfate-resistant materials such as vanadium oxide into the support coating, or the use of alternative support materials such as alpha-alumina (a-alumina), silica and titania, which are sulfation-resistant materials.

U.S. Patent No. 5,462,907 is directed to a ceria-alumina oxidation catalyst. This patent discloses oxidation catalyst compositions including a catalytic material containing ceria and alumina each having a surface area of at least about 10 m²/g, for example, ceria and activated alumina in a weight ratio of from about 1.5:1 to 1:1.5. Optionally, platinum may be included in the catalytic material in amounts which are sufficient to promote gas phase oxidation of CO and HC but which are limited to preclude excessive oxidation of SO₂ to SO₃. Alternatively, palladium in any desired amount may be included in the catalytic material. The catalyst compositions are disclosed to have utility as oxidation catalysts for pollution abatement of exhaust gases containing unburned fuel or oil. For example, the catalyst compositions may be used in a method to treat diesel engine exhaust by contacting the hot exhaust with the catalyst composition to promote the oxidation of the volatile organic fraction component of particulates in the exhaust. Related U.S. Patent No. 5,491,120 is directed to an oxidation catalyst with bulk ceria and a second bulk metal oxide. This patent discloses that the second bulk metal oxide may be one or more of titania, zirconia, ceria-zirconia, silica, alumina-silica and a-alumina. There are disclosures, such as U.S. Patent Nos. 4,714,694 and 5,057,483 disclosing a variety of catalyst compositions which include ceria in bulk form, alumina stabilized ceria and ceria-zirconia components.

Catalyzed soot filters are known from references such U.S. Patent Nos. 4,510,265 and 5,100,632. These references disclose the use of catalyzed soot filters in diesel exhaust streams. Reference is also made to SAE Technical Paper Series No. 860298, update on the evaluation of diesel particulate filters for underground mining by A. Lawson, et al.

U.S. Patent No. 4,902,487 discloses a process for treatment of diesel exhaust gases wherein diesel exhaust gas is passed through a filter to remove particulate therefrom before discharge and particulate deposited on the filter is combusted. In this process, gas containing NO₂ is disclosed to be catalytically generated in the exhaust stream. This is disclosed to be accomplished by putting a catalyst upstream of the filter. The upstream catalyst is disclosed to produce NO₂ in a diesel exhaust stream which contains NO.

A common method of pollution abatement of gas streams involves the use of a catalytic article in the form of multi-channel flow through structures. Such structures include multi-channel honeycomb structures where the honeycomb can be made of metal, ceramic or a catalyst containing composition. The honeycomb, for example, can be made by extrusion, calendaring or corrugation. The catalyst can be on the surface of the honeycomb or part of the honeycomb composition. For example, U.S. Patent No. 4,157,375 discloses zeolite catalyzed reduction of nitrogen oxides in exhaust gases conducted with catalytic articles in the form of multi-channel structures in which parallel channels are defined by thin walls made up of refractory oxides having zeolite dispersed therein and accessible to diffusion from surfaces of the channel walls. The reaction rate for this type of multi-channel parallel flow through catalyst configuration for catalytic reactions is often rate limited by bulk mass transfer and pore diffusion constraints.

Another method of pollution abatement relates to the filtering of particulate material from diesel engine exhaust gases using a catalyzed filter. Many references disclose the use of wallflow filters which comprise catalysts on or in the filter to filter and burn off. filtered particulate matter. A common construction is a multi-channel honeycomb structure having the ends of alternate channels on the upstream and downstream sides of the honeycomb structure plugged. This results in checkerboard type pattern on either end. Channels plugged on the upstream or inlet end are opened on the downstream or outlet end. This permits the gas to enter the open upstream channels, flow through the porous walls and exit through the channels having open downstream ends. The gas to be treated passes into the catalytic structure through the open upstream end of a channel and is prevented from exiting by the plugged downstream end of the same channel. The gas pressure forces the gas through the porous structural walls into channels closed at the upstream end and opened at the downstream end. Such structures are primarily disclosed to filter particles out of the exhaust gas stream. Often the structures have catalysts on or in the substrate which enhance the oxidation of the particles. Typical patents disclosing such catalytic structures include U.S. Patent Nos. 3,904,551; 4,329,162; 4,340,403; 4,364,760; 4,403,008; 4,519,820; 4,559,193 and 4,563,414.

Of interest is U.S. Patent No. 3,904,551 which discloses a system in which the substrate has a catalyst coating. It is disclosed in U.S. Patent No. 4,329,162 that a catalytic substance can be placed on the walls of the honeycomb structure to facilitate regeneration combustion in the body of that structure. U.S. Patent No. 4,559,193 recognizes that a ceramic honeycomb body can carry catalysts. U.S. Patent No. 4,340,403 discloses that where honeycombs are used for filters, there should be a separate honeycomb substrate carrying catalysts downstream for removal of carbon monoxide, hydrocarbons and nitrogen oxides. The honeycomb filter used upstream is viewed as only filtering particulate matter to prevent clogging of the catalytic honeycomb used to remove the gaseous pollutants. Similarly U.S. Patent No. 4,364,760 discloses the use of an upstream ceramic honeycomb filter which can burn the fine particles into carbon monoxide and hydrocarbons which can be treated by a separate three-way catalyst means. Other patents disclosing honeycomb type filters useful as diesel particulate traps include U.S. Patent Nos. 4,411,856; 4,427,728; 4,455,180; 4,557,962; 4,576,774; 4,752,516 and 4,759,892.

U.S. Patent No. 4,510,265 describes a self-cleaning diesel exhaust particulate filter which contains a catalyst mixture of a platinum group metal and silver vanadate, the presence of which is disclosed to lower the temperature at which ignition and incineration of the particulate matter is initiated. Filters are disclosed to include thin porous walled honeycombs (monoliths) or formed structures through which the exhaust gases pass with a minimum pressure drop. Useful filters are disclosed to be made from ceramics, generally crystalline, glass ceramics, glasses, metals, cements, resins or organic polymers, papers, textile fabrics and combinations thereof.

U.S. Patent No. 5,100,632 also describes a catalyzed diesel exhaust particulate filter and a method of removing deposits from the exhaust gas of a diesel engine. The method involves passing the exhaust gases through a catalyzed filter having porous walls where the walls have thereon as a catalyst a mixture of a platinum group metal and an alkaline earth metal. The catalyst mixture is described as serving to lower the temperature at which ignition of collected particulate matter is initiated. The filter element was found to result in particle burn-off from the catalyzed filter. Additionally, gaseous emissions from the diesel exhaust were recorded with the catalyzed filter versus no filter. The results showed that the catalyzed filters compared to using no filter resulted in 113 parts per million carbon monoxide versus 5 parts per million carbon monoxide for a catalyzed filter. Total hydrocarbons with no filter were 84 parts per million and with a filter were 41 parts per million. Nitric oxide went from 417 parts per million with no filter to 326 parts with a catalyzed filter. Total NOₓ went from 460 parts per million with no filter to 403 parts per million with a catalyzed filter; and nitrous oxide went from 43 parts with no filter to 77 parts with a catalyzed filter. It was observed that the presence of the catalyzed particulate filter in the exhaust system of a diesel engine has a generally positive effect on reducing the gaseous emissions of the system.

Japanese Kokai 3-130522 discloses the treatment of diesel exhaust gases characterized by use of an ammonia injector and porous ceramic filter having a denitration catalyst within the pores. The filter is installed in the wake of the diesel engine exhaust. The ceramic porous filter comprises an upstream fine pore path layer, and a downstream side course ceramic particle layer on which the denitration catalyst was supported. The fine layer can support a platinum or palladium or other hydrocarbon combustion catalyst. The diesel exhaust gas containing unburned carbon flows through the porous ceramic filter and the carbon particles are filtered onto the surface. The gas containing nitric oxides and the ammonia passes through the denitration catalyst containing side of the filter and the nitric oxides are reduced to nitrogen and water. The oxidation catalyst on the upstream side causes the particulate component to burn off catalytically.

U.S. Patent No. 4,404,007 is directed to a ceramic honeycomb structure wherein there are a plurality of projections provided over the entire wall surfaces of the cells in the structure body.

U.S. Patent No. 5,114,581 is directed to a back-flushable filtration device. The device includes a monolith of porous material having an inlet and an outlet end. The passage ways of the monolith are alternately plugged at the inlet and the outlet ends of the monolith, thereby preventing a direct passage of feed stock through the passageways from the inlet to the outlet end. A microporous membrane of mean porous size smaller than the mean pore size of the monolith material covers the surface of the passage ways. U.S. Patent No. 5,221,484, which is a continuation-in-part of U.S. Patent No. 5,114,581 is directed to a catalytic filtration device for separating particulate feed stock into a filtrate and particulate containing filter cake. The catalytic filtration device is suitable for catalyzing a gas phase reaction. Reactions which may be catalyzed include the reduction of oxides of nitrogen, the oxidation of sulfur dioxide, and the oxidation of volatile organic vapors.

JP Patent Application No. 63-242324 describes removing NOₓ and micro carbon particles effectively in exhaust gas from diesel engine, employing *inter alia* Ce and Ni on a thermal resistant filter.

DE-A-3337903 describes treating the exhaust gas from a diesel engine by passing it through a catalyst filter. The catalyst filter can contain a ceria component.

US Patent No. 5,053,378 describes a catalyst for treating the exhaust of an internal combustion engine. The catalyst contains *inter alia* a cerium component, a zirconium component and a platinum group metal component.

### SUMMARY OF THE INVENTION

The present invention relates to an apparatus suitable for oxidizing oxidizable components of a gas-borne stream, specifically, for treating diesel engine exhaust.

The present invention provides an apparatus comprising a catalyzed filter. The catalyzed filter comprises a first catalyst, the first catalyst comprising a first platinum group metal and a first cerium component. There is a second catalyst in communication with the first catalyst. The second catalyst comprises a second cerium component. The catalyzed filter can be any suitable filter substrate. For treating diesel engine exhaust, the filter is commonly referred to as a soot filter, with a preferred soot filter comprising a wall flow honeycomb substrate. The second catalyst is preferably supported on a flow through honeycomb substrate.

The apparatus is particularly effective with regard to reducing the total particulates in the exhaust gas streams, specifically diesel engine exhaust gas streams. The carbonaceous particulates ("soot") component of diesel engine exhaust is, as is well-known, comprised of two major components. One component is relatively dry carbonaceous particles and the other, usually referred to as a volatile organic fraction ("VOF") also referred to as a soluble organic fraction ("SOF"), is a mixture of high molecular weight hydrocarbons comprised of unburned and partially burned diesel fuel and lubricating oil. The volatile organic fraction is present in the diesel exhaust as either a vapor phase or a liquid phase, or both, depending on the temperature of the exhaust. In order to reduce the total particulates discharged so as to meet present and impending Government regulations concerning maximum allowable total particulates, the volatile organic fraction, or at least a portion thereof, is oxidized to innocuous C0₂ and H₂0 by being contacted with an oxidation catalyst under suitable reaction conditions. The particulate matter can additionally be filtered on a soot filter. The soot filter can be catalyzed to enable it to burn off trapped particles as the exhaust temperature increases to above the "light-off" temperature of the catalyst. That is the temperature at which catalytic combustion occurs. The Balance Point Temperature (BPT) is the temperature at which the soot burning rate achieved by the catalytic soot filter is equal to the soot accumulation rate in the filter. A lower BPT is preferred. The specific apparatus of the present invention enable lower BPT's to be achieved while efficiently using platinum group catalyst components.

An apparatus of the present invention for treating diesel engine exhaust comprises, in combination, a diesel engine having an exhaust outlet, a catalyzed filter in communication with the exhaust outlet, and a second catalyst in communication with the first catalyst. The catalyzed filter comprises a first catalyst which comprises a first platinum group metal and a first cerium component. The second catalyst comprises a second cerium component.

A preferred apparatus comprises a diesel engine having an exhaust outlet in which the catalyzed filter comprises a first catalyst comprising a first platinum group metal, a first cerium component, and a first zirconium component.

The configuration of the apparatus can be varied. Preferably, the second catalyst is located between the engine outlet and the first catalyst. Alternatively, the second catalyst can be located between the engine outlet and the catalyzed filter. In this embodiment the second catalyst can be supported on a separate substrate than the catalyzed filter such as flow through honeycomb substrate. Alternatively, the second catalyst can be located at the catalyzed filter. In this embodiment, the catalyzed filter has an axial length extending from an upstream filter end to a downstream filter end, and the second catalyst is located for at least part of the axial length from the upstream end. The second catalyst can extend for from 0.635 to 20.32 cm (0.25 to 8 inches) and preferably, from 1.524 to 12.7 cm (0.5 to 5 inches) from the upstream end.

In yet another embodiment, the second catalyst can be located downstream of the first catalyst. Alternatively, the second catalyst is located downstream of the first catalyst. In this embodiment the second catalyst can be supported on a separate substrate than the catalyzed filter such as flow through honeycomb substrate. Alternatively, the second catalyst can be located at the catalyzed filter. In this embodiment, the catalyzed filter has an axial length extending from an upstream filter end to a downstream filter end, and the second catalyst is located for at least part of the axial length from the downstream end. The second catalyst can extend for from 0.635 to 20.32 cm (0.25 to 8 inches) and preferably, from 1.524 to 12.7 cm (0.5 to 5 inches) from the downstream end.

The first catalyst composition of the first catalyst useful for the catalyzed soot filter comprises a first platinum group metal component, a first cerium component and preferably a first zirconium component.

The second catalyst is used in combination with the first catalyst, as a separate catalytic element or as part of the soot filter, a preferred second catalyst composition comprises a second cerium component and preferably a second platinum group metal component. Preferably, the second catalyst composition comprises a second metal oxide selected from silica, alumina, titania, zirconia, silica-alumina and ceria-zirconia.

In a useful second catalyst composition the second cerium component is bulk ceria having a BET surface area of at least about 10 m²/g and the second metal oxide is a bulk metal oxide having a BET surface area of at least about 10 m²/g. The second catalyst composition comprises ceria and a metal oxide in a weight ratio of from 5:95 to 95:5.

The second catalyst can comprise at least one second platinum group metal component. Useful second platinum group component can be selected from platinum, palladium, and rhodium components. The second platinum group components are preferably present in an amount of from 3.5 to 7062g/m³ (0.1 to 200 g/ft³) based on the weight of the metal.

Where the second platinum group component is a platinum component in an amount from 3.5 to 529 g/m³ (0.1 to 15 g/ft³), preferably from 3.5 to 176 g/m³ (0.1 to 5 g/ft³), based on the weight of the metal. In a useful second platinum group component the second platinum component can be present in an amount from 3.5 to 17.6 g/m³ (0.1 to 0.5 g/ft³) based on the weight of the metal.

The first catalyst composition can comprises a first metal oxide selected from silica, alumina, titania, zirconia, silica-alumina and ceria-zirconia.

In a useful first catalyst composition the first cerium component is bulk ceria having a BET surface area of at least about 10 m²/g and the first metal oxide is a bulk metal oxide having a BET surface area of at least about 10 m²/g. The first catalyst composition comprises ceria and a metal oxide in a weight ratio of from 5:95 to 95:5.

The first catalyst can comprise at least one first platinum group metal component. Useful first platinum group component can be selected from platinum, palladium, and rhodium components. The first platinum group components are preferably present in an amount of from 3.5 to 7062 g/m³ (0.1 to 200 g/ft³) based on the weight of the metal.

### DEFINITIONS

As used herein and in the claims, the following terms shall have the indicated meanings.

The term "gas-borne stream" means a gaseous stream which may contain non-gaseous components such as solid particulates and/or vapors, liquid mist or droplets, and/or solid particulates wetted by a liquid.

The term "BET surface area" has its usual meaning of referring to the Brunauer, Emmett, Teller method for determining surface area by N₂ absorption. Unless otherwise specifically stated, all references herein to the surface area of bulk ceria, the second metal oxides, or other components means the BET surface area.

The term "activated alumina" has its usual meaning of a high BET surface area alumina, comprising primarily one or more of gamma-, theta- and delta-aluminas (y-, 0- and 6-aluminas).

The term "catalytically effective amount" means that the amount of material present is sufficient to affect the rate of reaction of the oxidation of pollutants in the exhaust being treated.

The term "inlet temperature" shall mean the temperature of the exhaust, test gas or other stream being treated immediately prior to initial contact of the exhaust, test gas or other stream with the catalyst composition.

The term "ceria metal oxide catalytic material" means a combination of ceria and metal oxides selected from the class consisting of one or more of titania, zirconia, ceria-zirconia, silica, alumina-silica and alumina, the ceria having a BET surface area of at least about 10 m²/g, and the average surface area of the combination of high surface area ceria and metal oxide being at least 10 m²/g.

The term "combination" when used with reference to a combination of (a) bulk ceria and (b) bulk second metal oxide or (c) the foregoing and bulk activated alumina, includes combinations attained by mixtures or blends of (a) and (b) and/or (c) and superimposed discrete layers of (a) 5 and (b) and/or (c).

"Zirconium-stabilized ceria" or "aluminum-stabilized ceria" means ceria which has been stabilized against thermal degradation by incorporation therein of a zirconium or an aluminum compound. As is well-known, high surface area refractory oxides such as ceria and activated alumina are subject to loss of surface area (thermal degradation) and consequent reduction in catalytic efficiency upon prolonged exposure to high temperatures. a suitable ceria-stabilization technique is shown in U.S. Patent No. 4,714,694 of C.Z. Wan, et al., issued on December 22, 1991. As disclosed in U.S. Patent No. 4,714,694, ceria particles are impregnated with e.g., an aqueous solution of a soluble aluminum compound such as aluminum nitrate, aluminum chloride, aluminum oxychloride, aluminum acetate, etc. After drying and calcining the impregnated ceria in air at a temperature of, e.g., from about 300°C to 600°C for a period of ½ to 2 hours, the aluminum compound impregnated into the ceria particles is converted into an effective thermal stabilizer for the ceria.

As indicated above, the Balance Point Temperature ("BPT") is the temperature at which the soot burning rate achieved by the catalytic soot filter is equal to the soot accumulation rate in the filter.

### BRIEF DESCRIPTION OF THE DRAWINGS

Figure 1 is a schematic drawing of a preferred embodiment of the present invention.
Figure 2 is a schematic view in perspective of a wallflow catalytic honeycomb.
Figure 3 is a partial, sectional view of the element showing the alternate plugged channels.
Figure 4 is a sectional view of a portion of a wallflow honeycomb wall.
Figure 5 is a schematic view in perspective of a alternative wallflow catalytic honeycomb.
Figure 6 is a schematic drawing of a alternative embodiment of the present invention.

### DETAILED DESCRIPTION OF THE INVENTION AND PREFERRED EMBODIMENTS THEREOF

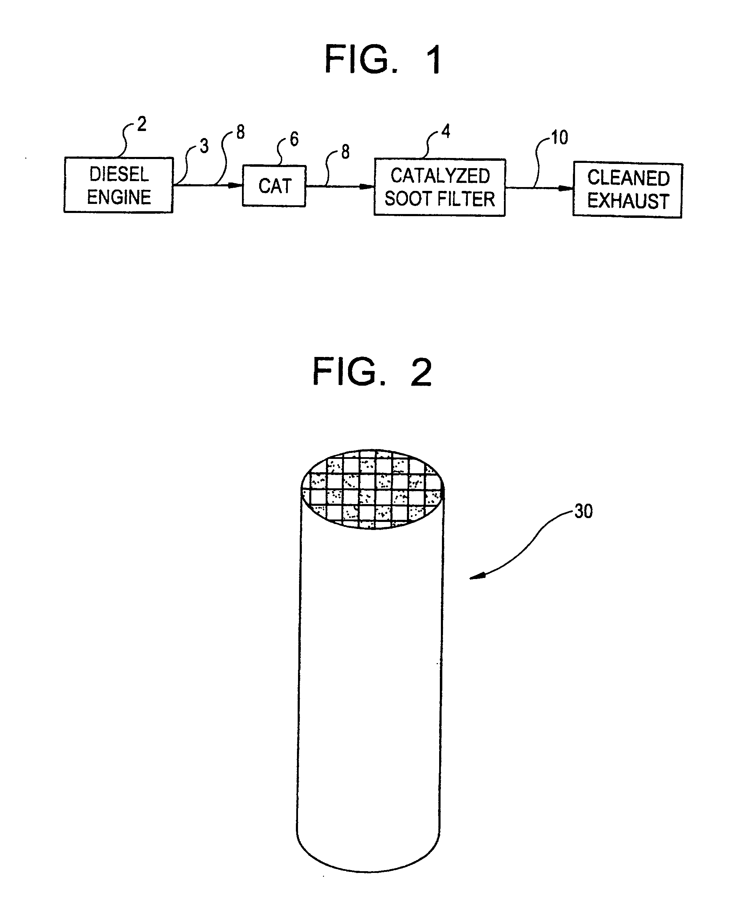

The apparatus of the present invention for oxidizing oxidizable components of a gas-borne stream in diesel engine exhaust, will be understood by those skilled in the art by reference to the accompanying Figures 1 through 5 and the description provided in this specification.

Waste gas streams such as internal combustion exhaust cause pollution and, therefore, their discharge into the atmosphere is undesirable. Such gaseous streams are comprised of undesirable components including those selected from the group consisting of ozone, nitrogen oxides, ammonia, carbonaceous materials and mixtures thereof.

The apparatus is particularly effective with regard to reducing the total particulates in the exhaust gas streams, specifically diesel engine exhaust gas streams. The carbonaceous particulates ("soot") component of diesel engine exhaust is, as is well-known, comprised of three major components. One component is relatively dry solid carbonaceous particles and the second, usually referred to as a volatile organic fraction ("VOF") also referred to as a soluble organic fraction ("SOF"), is a mixture of high molecular weight liquid phase hydrocarbons comprised of unburned and partially burned diesel fuel and lubricating oil. The third major component is the so-called "sulfate" which comes from oxidation product of sulfur in the fuel SO₃ which in turn combines with water in the exhaust to form condensable H₂SO₄. The volatile organic fraction is present in the diesel exhaust as either a vapor phase or a liquid phase, or both, depending on the temperature of the exhaust. In order to reduce the total particulates discharged so as to meet present and impending Government regulations concerning maximum allowable total particulates, the volatile organic fraction, or at least a portion thereof, is oxidized to innocuous C0₂ and H₂0 by being contacted with an oxidation catalyst under suitable reaction conditions. The catalyzed filter can burn off trapped particles as the exhaust temperature increases to above the "light-off" temperature of the catalyst. That is the temperature at which catalytic combustion occurs. The Balance Point Temperature (BPT) is the temperature at which the soot burning rate achieved by the catalytic soot filter is equal to the soot accumulation rate in the filter. A lower BPT is preferred. The specific apparatus of the present invention enable lower BPT's to be achieved while efficiently using platinum group catalyst components.

The present invention provides an apparatus comprising a catalyzed filter. The catalyzed filter comprises a first catalyst, the first catalyst comprising a first platinum group metal and a first cerium component. There is a second catalyst in communication with the first catalyst. The second catalyst comprises a second cerium component. The catalyzed filter can be any suitable filter substrate. For treating diesel engine exhaust, the filter is commonly referred to as a soot filter, with a preferred soot filter comprising a wall flow honeycomb substrate. The second catalyst is preferably supported on a flow through honeycomb substrate.

A preferred embodiment is schematically illustrated by reference to Figure 1. Exhaust gas passes from a diesel engine 2. The apparatus comprises a catalyzed filter 4. The catalyzed filter 4 comprises a first catalyst, the first catalyst comprising a first platinum group metal and a first cerium component. There is a second catalyzed element comprising a second catalyst 6 in communication with the first catalyst. The second catalyst comprises a second cerium component. In the embodiment illustrated in Figure 1 exhaust gas passes from the diesel engine 2 through exhaust gas conduit 8, through catalytic element 6, to catalyzed soot filter 4. Optionally, there can be a section of exhaust gas conduit 8 between the catalytic element 6 and the catalyzed soot filter 4. Alternatively, catalyzed filter 4 and catalytic element 6 can be adjacent to each other in adjacent housings (referred to as cans) or adjacent to each other within the same housing. The gas than passes from the catalyzed system to exhaust pipe 10 and then into the environment.

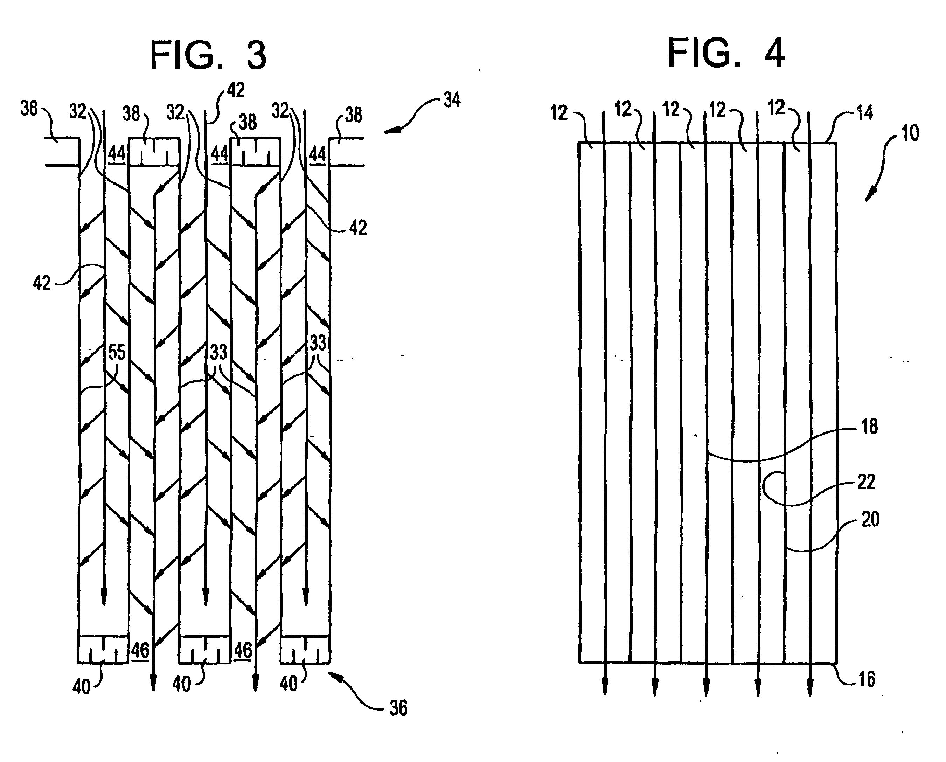

The catalyzed filter can comprise any suitable filter substrate. For treating diesel engine exhaust, the filter is commonly referred to as a soot filter, with a preferred soot filter comprising a wallflow honeycomb substrate, Figures 2 and 3. The second catalyst is preferably supported on a flowthrough honeycomb substrate, Figure 4.

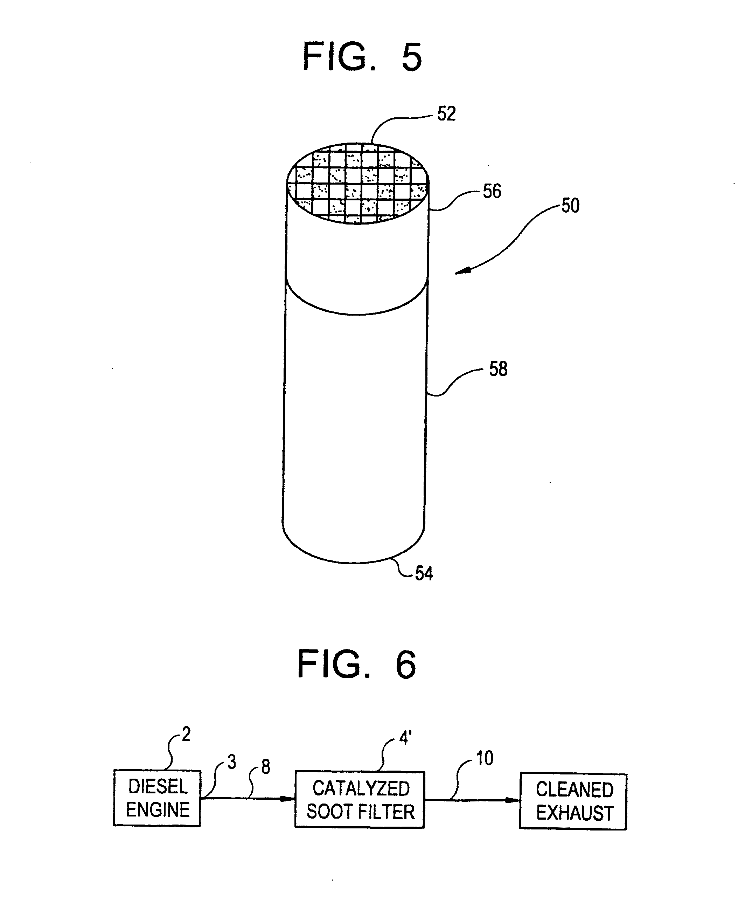

The configuration of the apparatus can be varied. Preferably, as recited, the second catalytic element 6 comprising the second catalyst is located between the diesel engine exhaust outlet 3 and the first catalyst of the catalyzed filter 4. In this embodiment the second catalyst can be supported on a separate substrate than the catalyzed filter such as flowthrough honeycomb substrate, Figure 4. Alternatively, as shown on Figure 5, the second catalyst can be located at the catalyzed filter 50. In this embodiment, the catalyzed filter 50 has an axial length extending from an upstream filter end 52 to a downstream filter end 54. The second catalyst is located for at least part of the axial length 56 from the upstream end 52. The second catalyst can extend for from 0.635 to 20.32 cm (0.25 to 8 inches) and preferably, from 1.524 to 12.7cm (0.5 to 5 inches) from the upstream end. The first catalyst can extend for at least part of the axial length 58 from downstream end 54 toward upstream end 52. There can be a gap between lengths 56 and 58.

In yet another embodiment, the second catalyst can be located downstream of the first catalyst. Reference is made to Figures 1 and 5. In corresponding embodiments elements 4 and 6 of Figure 1 are reversed, and the first and second having elements lengths 56 and 58 of Figure 5 are reversed along exhaust conduit 8. In this embodiment the second catalyst can be supported on a separate substrate than the catalyzed filter such as flow through honeycomb substrate. Alternatively, the second catalyst can be located at the catalyzed filter. In this embodiment, the catalyzed filter has an axial length extending from an upstream filter end to a downstream filter end, and the second catalyst is located for at least part of the axial length from the downstream end. The second catalyst can extend for from 0.635 to 20.32cm (0.25 to 8 inches) and preferably, from 1.524 to 12.7cm (0.5 to 5 inches) from the downstream end.

In Figure 6, which has reference characters corresponding to those of Figure 1 for corresponding elements, first catalyst composition of the first catalyst useful for the catalyzed soot filter 4' comprises a first platinum group metal component, a first cerium component and preferably a first zirconium component. Exhaust gas passes from a diesel engine 2. The apparatus comprises a catalyzed filter 4'. The catalyzed filter 4' comprises a first catalyst, the first catalyst comprising a first platinum group metal and a first cerium component. This embodiment can be used in the catalyzed soot filter 4 illustrated in Figure 1. In Figure 6 exhaust gas passes from the diesel engine 2 through exhaust gas conduit 8, to catalyzed soot filter 4'. The gas than passes from the catalyzed system to exhaust pipe 10 and then into the environment.

In a useful first catalyst composition the first cerium component is preferably and typically deposited on the soot filter as a soluble salt such as cerium nitrate. Also useful for slurry coating soot filter is bulk ceria having a BET surface area of at least about 10 m²/g and the first metal oxide is a bulk metal oxide having a BET surface area of at least about 10 m²/g. The first catalyst composition comprises ceria and a metal oxide in a weight ratio of from 5:95 to 95:5. Useful cerium components are disclosed in U.S. Patent Nos. 4,714,694 and 5,057,483. These include bulk ceria, zirconium stabilized ceria, aluminum stabilized ceria, and ceria compounds including rare earth metal oxides such as lanthanum, praseodymium and neodymium compound. The latter may be composites co-formed with the cerium component.

The first catalyst comprise at least one first platinum group metal component. Useful first platinum group component can be selected from platinum, palladium, and rhodium components. The first platinum group components are preferably present in an amount of from 3.53 to 7062.92 g/m³ (0.1 to 200 g/ft³), preferably from about 176 to 5297 g/m³ (5 to 150 g/ft³), more preferably from about 353 to 3531 g/m³ (10 to 100 g/ft³) based on the weight of the metal. Where the platinum group metal is platinum the preferred amount of platinum component based on platinum metal is from about 353 to 3531 g/m³ (10 to 100 g/ft³) and more preferably from about 529 to 2648 g/m³ (15 to 75 g/ft³) for the catalyzed soot filter. Where the platinum group metal is palladium the preferred amount of palladium component based on palladium metal is from about 882 to 7062 g/m³ (25 to 200 g/ft³) and more preferably from about 882 to 5297 g/m³ (25 to 150 g/ft³) for the catalyzed soot filter. Mixtures of platinum group metal components can be used.

The first catalyst composition can comprises a first metal oxide selected from silica, alumina, titania, zirconia, silica-alumina and ceria-zirconia.

In Figure 6 the first catalyst comprises a first platinum group metal component, a first cerium component and preferably a first zirconium component. In this arrangement the relative amounts of the components are present in a weight ratio from 1-60% zirconia based on the weight of ceria plus zirconi, preferably 5-50% and more preferably 10-40%. The total loading of catalyst components on the soot filter substrate is typically present in the amount from about 706 to 88,286 g/m³ (20 g/ft³ to 2500 g/ft³) and preferably from about 1765 to 52,972 g/m³ (50 g/ft³ to 1500 g/ft³) and more preferably 3531 to 52,972 g/m³ (100 g/ft³ to 1500 g/ft³).

Generally, within the first catalyst useful as a catalyzed soot filter the catalyst can contain additional other components known for use in catalyzed soot filters such alkaline earth metal oxides as disclosed in U.S. Patent No. 5,100,632.

A second catalyst is used in combination with the first catalyst, as a separate catalytic element or as part of the soot filter, and the second catalyst composition comprises a second cerium component and optionally a second platinum group metal component. Preferably, the second catalyst composition comprises a second metal oxide selected from silica, alumina, titania, zirconia, silica-alumina, zeolite and ceria-zirconia.

In a useful second catalyst composition the second cerium component is bulk ceria having a BET surface area of at least about 10 m²/g and the second metal oxide is a bulk metal oxide having a BET surface area of at least about 10 m²/g. The second catalyst composition comprises ceria and a metal oxide in a weight ratio of from 5:95 to 95:5.

The second catalyst can comprise at least one second platinum group metal component. Useful second platinum group component can be selected from platinum, palladium, and rhodium components. The second platinum group components are preferably present in an amount of from 3.53 to 7062.92 g/m³ (0.1 to 200 g/ft³) based on the weight of the metal.

Where the second platinum group component is a platinum component in an amount from 3.53 to 529.72 g/m³ (0.1 to 15 g/ft³), preferably from 3.5 to 105 g/m³ (0.1 to 3 g/ft³), more preferably from 3.53 to 176.6 g/m³ (0.1 to 5 *g/ft³), yet more preferably from 3.5 to 353 g/m³ (0.1 to 10 g/ft³) based on the weight of the metal. In a useful second platinum group component the second platinum component can be present in an amount from 3.53 to 17.66 g/m³ (0.1 to 0.5 g/ft³) based on the weight of the metal.

Useful second catalyst are disclosed in U.S. Patent Nos. 4,714,694 and 5,057,483.

The second catalyst is designed for reducing diesel exhaust particulates emissions by oxidation of the volatile organic fraction thereof. This is attained by a catalytic material which comprises a cerium component. Preferably, the cerium component is combined as a mixture with one or more selected second metal oxides. The basic and novel characteristics of the second catalyst of the present invention are believed to reside in the use of the defined combination of ceria and preferably the second metal oxide as an oxidation catalyst without the addition of platinum group metal components thereto. However, as indicated above and in the cited patent platinum group metal components can be included as part of the second catalyst.

Preferably, but not necessarily, ceria as well as the second metal oxides, are in bulk form, and preferably have a surface area of at least about 10 m²/g, preferably at least about 20 m²/g. For example, the bulk ceria may have a surface area of from about 70 to 150 m²/g. The combination of ceria and the second metal oxides should have a BET surface area of 10 m²/g or higher. Optionally, up to about 90 percent by weight, e.g., from about 5 to 90 percent by weight, of the total weight of bulk ceria, second metal oxide and activated alumina may be provided by the activated alumina, which may have a BET surface area of 10 m²/g or higher, preferably at least about 20 m²/g, e.g., a surface area of from about 120 to 180 m²/g. When alumina is present, each of the ceria, alumina and other metal oxide is preferably present in the amount of at least about 5 percent by weight of the total weight of metal oxides present.

A catalyst composition in accordance with the present invention effectively catalyzes the oxidation of the volatile organic fraction so as to provide a significant reduction in total particulates in diesel engine exhaust and exhibits good durability, that is, long life. It should be noted that the prior art generally considers refractory base metal oxides used in diesel oxidation catalysts to be merely supports for the dispersal thereon of catalytically active metals such as platinum group metals. In contrast, the present invention teaches that a ceria-second metal oxide catalytic material which can consist essentially of only bulk ceria and one or more selected bulk second metal oxides which provides a mixture of sufficiently high surface area, e.g., at least 10 m²/g, preferably at least 20 m²/g, and dispersed on a suitable carriers provides a durable and effective diesel oxidation catalyst.

It has further been found that beneficial effects are attained in some circumstances by the optional incorporation of platinum or palladium in the second catalyst composition. The platinum can be present at loadings much lower than those conventionally used in oxidation catalysts.

If a catalytic metal such as platinum is added to the catalytic composition, it serves to catalyze the oxidation of gas phase HC and CO pollutants as an added benefit. However, such catalytic metal is not needed to supplement the action of the ceria-second metal oxide catalytic material in reducing total particulate emissions. The catalytic metal, be it platinum or palladium, does not appear to play a role in controlling particulates in that the quantity or type of metal (platinum or palladium) utilized in the catalytic material does not significantly affect the rate of particulates conversion.

The second catalytic element catalysts of the present invention may take the form of a carrier or substrate, such as a monolithic honeycomb structure (a body having a plurality of gas flow passages extending therethrough), onto which is applied a coating of the catalytic material comprising a mixture of high surface area ceria and one or more second metal oxides and, optionally, activated alumina and, optionally, platinum or palladium. The preferred substrate is a flowthrough honeycomb substrate. As discussed below, discrete coatings of the ceria, second metal oxide and alumina may be employed.

Following is a general method of preparation of the catalyst composition which can be applied to embodiments of the first and second catalysts. The ceria containing catalytic materials used in the present invention may be prepared in the form of an aqueous slurry of ceria particles and other components such as metal oxide particles, the particles optionally being impregnated with the platinum or palladium catalytic metal component, if one is to be utilized. The slurry is then applied to the carrier, dried and calcined to form a catalytic material coating ("washcoat") thereon. Typically, the ceria and second metal oxide particles are mixed with water and an acidifier such as acetic acid, nitric acid or sulfuric acid, and ball milled to a desired particle size.

The optional catalytic metal component, e.g., platinum or palladium, is, when used, preferably dispersed on the ceria particles or on the metal oxide particles, or on both the ceria and second metal oxide particles. If activated alumina is present as part of the combination of the catalytic material, some or all of the catalytic metal component may be dispersed on it. In such cases, the ceria and/or second metal oxides and/or activated alumina act as both as a catalytic material and a support for the optional catalytic metal component. Such incorporation may be carried out after the ceria-second metal oxide catalytic material is coated as a washcoat onto a suitable carrier, by impregnating the coated carrier with a solution of a compound of the metal, followed by drying and calcination. However, preferably, the ceria particles or both the ceria and metal oxide particles are impregnated with a compound of the platinum or palladium catalytic metal before a coating of the ceria second metal oxide catalytic material is applied to the carrier. In either case, the optional platinum or palladium metal may be added to the ceria-metal oxide catalytic material as a solution of a soluble compound of the metal, the solution serving to impregnate the ceria and metal oxide particles, which may then be dried and the platinum or palladium fixed thereon. Fixing may be carried out by calcination or by treatment with hydrogen sulfide or by other known means, to render the metal in water-insoluble form.

Generally, the slurry of ceria and metal oxide particles, and activated alumina if present, whether or not impregnated with the platinum or palladium metal salt solution, will be deposited upon the carrier substrate and dried and calcined to adhere the catalytic material to the carrier and,, when the catalytic metal compound is present, to revert the platinum or palladium compound to the elemental metal or its oxide. Suitable platinum or palladium compounds for use in the foregoing process include potassium platinum chloride, ammonium platinum thiocyanate, amine-solubilized platinum hydroxide, chloroplatinic acid, palladium nitrate, and palladium chloride, as is well known in the art. During calcination, or at least during the initial phase of use of the catalyst, such compounds, if present, are converted into the catalytically active elemental metal or its oxide.

In an alternate catalyst composition design, separate, discrete layers of bulk ceria, bulk metal oxide and, optionally, bulk activated alumina may be employed. These discrete layers are applied as separate coats superimposed one above the other on the carrier. The order of application of such discrete layers is not important and each layer (of ceria, second metal oxide and, optionally, activated alumina) may comprise either the first-applied or inner coat or layer, the last-applied or outer coat or layer or, if a third layer is present, the intermediate layer or coat. More than three layers may be used, e.g., a layer of a given material may be repeated or two or more of the second metal oxides may be present as discrete layers of different second metal ox-ides. When a catalytic metal is present in a catalyst composition in which the catalytic material is present in two or more discrete layers or coats of materials, the catalytic metal may be dispersed in any one or more of the discrete layers or coats.

When the catalytic material is applied as a thin coating or coatings to a suitable carrier, such as described above, the proportions of ingredients are conventionally expressed as weight of material per unit volume of catalyst, as this measure accommodates the presence of different sizes of catalyst composition voids provided by different carrier wall thicknesses, gas flow passage dimensions, etc. Grams per cubic centimeter ("g/cm³") (Grams per cubic inch ("g/in³")) units are used to express the quantity of relatively plentiful components such as the ceria-metal oxide' catalytic material, and grams per cubic meter ("g/m³") (grams per cubic foot ("g/ft³")) units are used to express the quantity of the sparsely used ingredients, such as the platinum or palladium metal. For typical diesel exhaust applications, the ceria-second metal oxide catalytic, material of the present invention generally may comprise from about 0.015 (0.25) to about 0.24 g/cm³ (4.0 g/in³), preferably from about 0.015 (0.25) to about 0.183 g/cm³ (3.0 g/in³) of the coated carrier substrate, optionally including from about 0 to 882 (25), preferably from about 0 to 529 g/m³ (15 g/ft³) of platinum or 0 to 7062 g/m³ (200 g/ft³), preferably from about 0 to 4237 g/m³ (120 g/ft³) of palladium.

Generally, other ingredients may be added to the catalyst composition of the present invention such as conventional thermal stabilizers for the activated alumina when it is present, e.g., rare earth metal oxides such as ceria. Thermal stabilization of high surface area ceria and alumina to militate against phase conversion to less catalytically effective low surface area forms is well-known in the art although, as noted above, thermal stabilization of alumina is not usually needed for diesel exhaust service. Such thermal stabilizers may be incorporated into the ceria (or activated alumina when it is used) by impregnating the particles with, e.g., a solution of a soluble compound of the stabilizer metal, for example, an aluminum nitrate solution in the case of stabilizing the ceria, and then drying and calcining the impregnated ceria to convert the aluminum nitrate impregnated therein into alumina. In one embodiment, the catalyst composition consists essentially only of the high surface area ceria and high surface area second metal oxide, preferably present in a weight proportion of 1.5:1 to 1:1.5, with or without thermal stabilizers impregnated therein, and, optionally, platinum in a limited amount or palladium. A basic and novel characteristic of this invention in believed to reside in the use of the combined ceria and second metal oxide as a second catalyst without necessity of the inclusion of precious metal or other catalytic metals except the optional inclusion of platinum or palladium.

### The Carrier (Substrate)

The carrier used in this invention should preferably be relatively inert with respect to the catalytic composition dispersed thereon. The preferred carriers are comprised of ceramic-like materials such as cordierite, a-alumina, silicon nitride, zirconia, mullite, spodumene, alumina-silica-magnesia or zirconium silicate, or of refractory metals such as stainless steel. The carriers are preferably of the type sometimes referred to as honeycomb or monolithic carriers, comprising a unitary cylindrical body having a plurality of fine, substantially parallel gas flow passages extending therethrough and connecting both end-faces of the carrier to provide a "flow-through" type of carrier. (See Figure 4) Such monolithic carriers may contain up to about 108 (700) or more flow channels ("cells") per square centimeter (per square inch) of cross section, although far fewer may be used. For example, the carrier may have from about 1 to 93 (7 to 600), more usually from about 31 to 62 (200 to 400), cells per square centimeter ("cpsc") (square inch ("cpsi")). Flow-through carriers are preferred as substrates for the second catalyst.

Figure 4 illustrates a flow-through honeycomb 10 which has a plurality of channels 12. The honeycomb has an inlet end 14 and an outlet end 16. Each channel 12 is open at the inlet side 14 and open at the outlet side 16. Gases passing through the honeycomb indicated by arrows 18 enter through inlet end 14 and exit from outlet end 16. The gases pass through the channels 12. The channels have channel walls 20. The channel walls 20 are coated with a layer of catalyst composition 22 applied as recited above. The catalyst composition is on each side of the channel walls 20 so that each honeycomb channel is coated with catalyst. The gases passing through the honeycomb contact the channel by diffusing into the catalyst surface in a direction perpendicular to the direction of flow.

Wallflow carriers, which are illustrated in Figures 2 and 3 are generally similar in structure to flow-through carriers, with the distinction that each channel is blocked at one end of the carrier body, with alternate channels blocked at opposite end-faces. Wallflow carrier substrates and the support coatings deposited thereon are necessarily porous, as the exhaust must pass through the walls of the carrier in order to exit the carrier structure. Wallflow carriers are preferred as substrates for the catalytic filter which acts as a substrate for the first catalyst.

As indicated above wallflow article means and includes conventional filter type articles of the type made from cordierite, mullite, alumina and/or other refractory metal oxides conventionally used for this purpose. The element may be formed of any porous material which is able to withstand the environment(s), particularly high temperatures, encountered in treating the fluid streams of interest. In the practice of the present invention, the catalyzed filter is placed in a housing which directs the fluid stream to be treated through the inlet to the inlet side of the element. The fluid passes through the porous wall comprising a catalyst to the outlet side and out of the outlet. Wallflow catalytic filters useful for the purposes of this invention include thin, porous-walled honeycomb (monolith) or foam structures through which the fluid stream passes without causing too great an increase of back pressure or pressure drop across the article. Normally, the presence of a clean wallflow article will create back pressure of 2.54 cm (1 inch) water column to 1.5 cpsc (10 cpsi). Wallflow articles can contain slotted channels separated by parallel walls, sinusoidal channels composed of alternating flat and sinusoidal sheets, or parallel channels having rectangular, square, circular, oval, triangular, hexagonal, or other polygonal cross sections. Preferably, wallflow articles of this type comprise a plurality of square channels with between 1.2 and 93 (8 and 600) channels per square centimeter (square inch) of cross section, a wall thickness of between 0.005 to 0.254 cm (0.002 and 0.1 inches), and a water absorption pore volume of between 10% and 70% by weight. Preferred configurations are between 7.7 and 31 (50 and 200) channels per square centimeter (square inch), a wall thickness of between 0.017 and 0.0762 cm (0.007 and 0.03 inches), and a water absorption pore volume of between 15% and 50%. Particularly useful for the purposes of this invention are the variety of prior art diesel engine exhaust particulate filters which may be catalyzed. U.S. Patent No. 4,329,162 discloses suitable filter elements.

The porous wallflow article used in this invention is catalyzed in that the wall of said element has thereon or contained therein one or more catalytic materials. Catalytic materials may be present on the inlet side of the element wall alone, the outlet side alone, both the inlet and outlet sides, or the wall itself may consist all, or in part, of the catalytic material. This invention includes the use of one or more layers of catalytic materials and combinations of one or more layers of catalytic materials on the inlet and/or outlet walls of the element.

Figures 2 and 3 illustrate a schematic view of a wallflow honeycomb article 30. Alternate channels were plugged at the inlet with inlet plugs 38 and at the outlet with outlet plugs 40 to form opposing checkerboard patterns at the inlet 34 and outlet 36. A gas stream 42 enters through the unplugged channel inlet 44, is stopped by outlet plug 40 and diffuses through channel walls 33 to the channel outlet 46. The gas cannot pass back to the inlet side of walls 33 because of inlet plugs 38. As shown in Figure 3, the inlet sides 32 of walls 33 are coated with a porous catalyst composition 55.

### EXAMPLES

Several examples of this invention have been reduced to practice in an exhaust stream in the form of full size catalyzed soot filters with a flow-thru oxidation catalyst located in the exhaust stream between the engine and the filter. This system has been tested and evaluated in engine tests under controlled conditions to determine performance. The samples and the test results are described below...

The test program was conducted using a Cummins L-10 (10 liter displacement) engine. This engine, MY'87 was representative of older bus engines, e.g., pre-Euro I (1993) in Europe and gave total particulate emissions of ca. 0.186 - 0.223 g/MJ (0.5-0.6 g/bhp-hr) over the U.S. HD Transient Test. This engine was used to conduct Balance Point Temperature (BPT) measurements on the test samples. a description of the test protocols and method of determining BPT for a sample follows:
1. At the beginning of the test obtain a pressure drop across the trap range for a fully regenerated trap at rated power. This delta P range should be a reliable average of several tests of the same type of substrate measured on a fully warmed up engine at rated power. This delta P value serves as a reference point for all further BPT tests. It is important that each substrate be aged prior to the delta P measurements.

### Test protocol:

### 2. Engine warm-up for 30 minutes.

3. Measure trap delta P at rated power. If within the clean range, proceed with the trap loading procedure. If delta P is too high, then proceed with the regeneration procedure. This is necessary in order to ensure good test-to-test repeatability.

### 4. Regeneration procedure:

Regenerate a trap at peak torque, then verify delta P according to Item 3. If necessary, continue with the regeneration process. Duration of regeneration may vary depending on the trap history.

5. If the delta P is within the clean range, then log all of the engine parameters to make sure that the engine still operate properly (no shift in performance).

### 6. Trap loading procedure:

We are loading trap at 238J (176 ft-lb) @ 2100 rpm (approximately 25% of throttle) for 20 minutes. Other conditions can be used as long as exhaust temp. at the trap inlet remains below 315°C (600 deg.F).

We log and report delta P at the beginning and at the end of the loading process. This provides relative indication to the amount of soot loaded, which is important for proper interpretation of the test results, as amount of soot may affect BPT. In our case at ETS, typical increase of delta P during the loading session is 344 Pa (0.05 psi).

### 7. BPT test procedure:

We always run a BPT test in five incremental load steps(approximally 20 deg C increments), where the step 3 is about at, 1 & 2 are below, and 4 & 5 are above the anticipated BP temperature. This represents our best effort to maintain the same soot load for different traps tested. However, the engine loads may vary due to various BPTs and so does the amount of soot.

This approach requires so called pre-test, which basically involves preliminary defining an anticipated BPT value (usually a short BPT test.

Duration of each load step is 10 minutes. Delta P during the last 6 minutes is used to calculate a trendline slope using linear regression. Each slope value corresponds to a certain exhaust temperature. This gives us 5 data points.

8. The whole procedure starting with the item 3 has to be performed three times. This gives us for a total of 15 data points (slope vs. temperature).

### 9. Data treatment:

We plot all 15 points together and run a linear regression trendline. The BPT is determined at "Zero" slope.

### Description of Flow-Thru Catalyst Compositions:

This catalyst was comprised of 7062 g/m³ (200 g/ft³) Pt on bulk gamma-alumina (0.15 g/cm³ (2.5 g/in³ )).

This DOC #2 catalyst was comprised of 176 g/m³ (5.0 g/ft³ Pt) on bulk gamma-alumina (0.05g/cm³ (0.83 g/in³)), plus bulk zirconia-stabilized ceria (0.05g/cm³ (0.83 g/in³)) plus bulk iron-exchanged beta zeolite (0.05 g/cm³ (0.82 g/in³)). Total loading of non-Pt washcoat components was 0.15 g/cm³ (2.5 g/in³).

This DOC #3 catalyst was comprised of 17.6g/m³ (0.5 g/ft³) Pt on bulk gamma-alumina (0.05g/cm³ (0.83 g/in³)), plus bulk zirconia-stabilized ceria (0.05g/cm³ (0.83 g/in³)) plus bulk iron-exchanged beta zeolite 0.05 g/cm³ (0.82 g/in³). Total loading of non-Pt washcoat components was 0.15g/cm³ (2.5 g/in³).

The CSF #2 soot filter substrate was catalyzed with 176 g/m³ (5.0 g/ft³) Pt and 17657 g/m³ (500 g/ft³) CeO₂. Both components were applied to the soot filter substrate via solution impregnation with soluble precursors.

The CSF #3 soot filter was catalyzed with 1766g/m³ (50.0 g/ft³) Pt and 17657 g/m³ (500 g/ft³) CeO₂. Both components were applied to the soot filter substrate via solution impregnation with soluble precursors.

The CSF #4 soot filter was catalyzed with 2317g/m³ (65.6 g/ft³) Pt, 17657 g/m³ (500 g/ft³) CeO₂ and 8828 g/m³ (250 g/ft³) ZrO₂. These components were applied to the soot filter substrate via solution impregnation with soluble precursors. The Pt was distributed as 176 g/m³ (5.0 g/ft³) uniformly over the soot filter substrate and the balance deposited in a separate step to a depth (length) of 10cm (4") inward from on end (face) of the substrate. This provided a Pt-enriched end.

The CSF #5 soot filter was catalyzed with 1766 g/m³ (50.0 g/ft³) Pt, 17657 g/m³ (500 g/ft³) CeO₂ and 8828 g/m³ (250 g/ft³) ZrO₂. The components were applied to the soot filter substrate via solution impregnation with soluble precursors.

The CSF #6 soot filter was catalyzed with 176g/m³ (5.0 g/ft³) Pt, 17657g/m³ (500 g/ft³) CeO₂ and 5297 g/m³ (150 g/ft³) ZrO₂. These components were applied to the soot filter substrate via solution impregnation with soluble precursors. In addition, a washcoat slurry was applied to one end of the soot filter substrate to a depth (length) of ca. 10cm (4") inward from one face of the substrate. This washcoat was comprised of 12.4 wt% Pt on gamma-alumina and was deposited on the one end of the filter substrate to result in a Pt loading of 2140 g/m³ (60.6 g/ft³) equivalent. Thus, the total Pt loading on the CSF was 2316 g/m³ (65.6 g/ft³).

The CSF #7 soot filter was catalyzed with 7062g/m³ (200 g/ft³) Pt, 17657 g/m³ (500 g/ft³) CeO₂ and 8828 g/m³ (250 g/ft³) ZrO₂. The components were applied to the soot filter substrate via solution impregnation with soluble precursors.

The balance point measurements were run at three speeds on the engine (1300, 1700 & 2100) and incremental load steps were used to attain different exhaust temperatures. In this way a range of conditions under the torque curve of the engine were evaluated. The lower speeds (1300 & 1700 rpm) are probably more representative of bus duty cycle, whereas 2100 rpm represents rated speed for the engine.

Seven of the soot filter Examples used for the tests are described in Table I, below:

**Table I -**

| Diesel Soot Filter Sample Designations | | | |
|---|---|---|---|
| Sample No. | Soot Filter Catalyst Composition | Pt Loading (g/ft³)* | Comment |
| 1 | None | 0.0 | Uncatalyzed Soot Filter |
| 2 | Pt/CeO₂ | 5.0 | |
| 3 | Pt/CeO₂ | 50.0 | |
| 4 | Pt/CeO₂ZrO₂ | 65.6 | Pt Enriched End (10cm) ((4")) |
| 5 | Pt/CeO₂ZrO₂ | 50.0 | |
| 6 | Pt/CeO₂Al₂O₃ZrO₂ | 65.6 | Washcoated End (10cm) ((4")) |
| 7 | Pt/CeO₂ZrO₂ | 200.0 | |

| | | | |
|---|---|---|---|
| Note: Soot Filter Substrate, Corning Cordierite Wall Flow, 28.6cm dia x 35.5cm long/15.5 cpsc) (11.25" dia. x 14.0" long/100 cpsi). * 1 g/ft³ = 35.3g/m³ | | | |

The catalyzed soot filters (CSF) were prepared by solution impregnation of the soot filter substrates. Soluble precursor salts of platinum (platinum amine salt), cerium salt (cerium nitrate) and zirconium salt as zirconium acetate. Where alumina was used, it was platinum a-alumina slurry in Sample 6. The CSF #2 soot filter substrate was catalyzed with 176 g/m³ (5.0 g/ft³) Pt and 17657 g/m³ (500 g/ft³) CeO₂. Both components were applied to the soot filter substrate via solution impregnation with soluble precursors. Examples 2 and 3 were catalyzed wtih Pt and CeO₂ and varied in Pt loading level. Examples 5 and 7 were catalyzed with an improved formulation based on Pt, CeO₂ and ZrO₂. The ZrO₂ component was included to achieve better catalyst activity and stability. These two CSF's again varied in Pt loading level. Example 4 also contained Pt, CeO₂ and ZrO₂; however, the Pt on this CSF was distributed as 176 g/m³ (5.0 g/ft³) fairly uniformly over the soot filter substrate and the balance of the total Pt loading was concentrated in the 10cm (4') length of one end of the soot filter substrate. All the Pt in Example 4 was applied via solution impregnation. Example 6 was solution impregnated with 176 g/m³ (5.0 g/ft³) Pt. plus CeO₂ and ZrO₂ in the same way as Example 4, but the balance of the Pt was applied to the 10cm (4") length of one end as a Pt/Al₂O₃/CeO₂-ZrO₂ slurry washcoat.

Three flow-thru catalysts used in the tests are described in Table II below:

**Table II -**

| Flow-Thru Catalyst Sample Designations | | | |
|---|---|---|---|
| Sample No. | Catalyst Composition | Pt Loading (g/ft³)* | Comment |
| Cat #1 | Pt/Al₂O₃ | 200 | NO to NO₂ Catalyst |
| DOC #2 | Pt/Al₂O₃CeO₂ | 5.0 | Diesel Oxidation Catalyst |
| DOC #3 | Pt/Al₂O₃CeO₂ | 0.5 | Diesel Oxidation Catalyst |

| | | | |
|---|---|---|---|
| Note: Flow-Thru Substrate, Corning 24.13 cm dia x 15.24 cm long/46.5 cpsc (9.5" dia. x 6.0" long/300 cpsi). *1 g/ft³ = 35.3 g/m³ | | | |

In Comp #1 the first flow thru catalyst (designated Cat #1) was comprised of a high loading of Pt on gamma-alumina. This catalyst was comprised of 7062 g/m³ (200 g/ft³) Pt on bulk gamma-alumina (0.15g/cm³) (2.5 g/in³)). This catalyst is a strong oxidation catalyst which has been reported to be effective for soot burn-off and thereby filter regeneration. This catalyst was placed upstream of uncatalyzed SF#1 (Table I) as a control sample. The Comp #1 sample required that it be run on the engine with ultra low sulfur fuel (<50 ppm) because of the inhibition of the catalytic NO to NO₂ oxidation reaction by the SOx in the exhaust and as a result inhibition of filter regeneration. The other flow thru catalysts (designated DOC #2 & #3) were diesel oxidation catalysts which are effective for VOF conversion. This DOC #2 catalyst was comprised of 176 g/m³ (5.0 g/ft³) Pt on bulk gamma-alumina (0.05 g/cm³ (0.83 g/in³)). plus bulk zirconia-stabilized ceria (0.05 g/cm³ (0.83 g/in³)) plus bulk iron-exchanged beta zeolite (0.05 g/cm³ (0.82 g/in³)). Total loading of non-Pt washcoat components was 0.15 g/cm³ (2.5 g/in³). This DOC #3 catalyst was comprised of 17.6 g/m³ (0.5 g/ft³) Pt on bulk gamma-alumina (0.05 g/cm³ (0.83 g/in³)), plus bulk zirconia-stabilized ceria (0.05 g/cm³ (0.83 g/in³)) plus bulk iron-exchanged beta zeolite (0.05 g/cm³ (0.82 g/in³)). Total loading of non-Pt washcoat components was 0.15 g/cm³ (2.5 g/in³).

Balance Point Temperature (BPT) tests were conducted on the engine with various CSF and DOC + CSF combinations. Lower BPT indicates a lower temperature at which the rate of soot oxidation is equal to the rate of soot accumulation due to engine exhaust. A summary of the example engine test runs are as follows:
Comp #1: This run evaluated the sample which consisted of the Pt/Al₂O₃ flow-thru (Cat #1) upstream of the uncatalyzed soot filter (SF#1). This sample configuration represented a control case and is consistent with the prior art. This sample was evaluated with the engine running on ultra low sulfur fuel consistent with recommendations of this type of soot filter technology.
Comp #2: This was a repeat run of the sample of Run #1, but with the engine running on normal sulfur fuel.
Comp #3: This run evaluated CSF #5 alone which was catalyzed with Pt and CeO₂ and having a Pt loading level of 176 g/m³ (5.0 g/ft³). This sample was run using normal sulfur fuel.
Ex #4: This run was a repeat of Comp #3 using CSF #2, but with flow-thru DOC #3 (Pt loading of 17.6g/m³ (0.5 g/ft³)) mounted upstream of the soot filter. This sample is an example of this invention and was run using normal sulfur fuel.
Ex #5: This run was a repeat of Ex #4 using CSF #2, but with flow-thru DOC #2 (Pt loading of 176 g/m³ (5.0 g/ft³)) mounted upstream of the soot filter in place of DOC #3. This sample is an example of this invention and was run using normal sulfur fuel.
Comp #6: This run was an evaluation of CSF #3 alone. This filter was catalyzed with Pt/CeO₂ as was CSF #5, but the Pt loading level was 1765 g/m³ (50.0 g/ft³). This sample was run using normal sulfur fuel.
Ex #7: This run was an evaluation of CSF #5 alone. This filter was catalyzed with an improved catalyst formulation consisting of Pt/CeO₂/ZrO₂ and had a Pt loading level of 1765 g/m³ (50 g/ft³). This sample is an example of this invention and it was run using normal sulfur fuel.
Ex #8: This run was also an evaluation of CSF #5, but with flow-thru DOC #2 (Pt loading of 176 g/m³ (5.0 g/ft³)) mounted upstream of the soot filter. This sample is an example of this invention and was run using normal sulfur fuel.
Ex #9: This run was an evaluation of CSF #6 alone. This filter was catalyzed by solution impregnation with Pt/CeO₂/ZrO₂ over the whole filter substrate and the Pt load for this was 176 g/m³ (5.0 g/ft³). In addition, a 10cm (4 inch) length of one end of the soot filter substrate was catalyzed with a slurry washcoat comprised of Pt/CeO₂-ZrO₂/Al₂O₃ powders. The Pt loading on this washcoat accounted for the balance of the total Pt loading of 2316 g/m³ (65.6 g/ft³). This sample is an example of this invention. It was run with the 10cm (4 inch) washcoated and Pt enriched end facing upstream in the exhaust (the inlet) and it was run using normal sulfur fuel.
Ex #10: This run was an evaluation of CSF #4 alone. This filter was catalyzed, like CSF #6, by solution impregnation with a base of Pt/CeO₂/ZrO₂ and having a Pt loading level of 176 g/m³ (5.0 g/ft³) over the whole filter substrate, but in addition a 10cm (4 inch) length of one end of the filter substrate was further catalyzed by solution impregnation with additional Pt in an amount to bring the total loading to 2316 g/m³ (65.6 g/ft³). This sample is an example of this invention. For this run it was mounted with the 10cm (4 inch) Pt-enriched end facing upstream in the exhaust (as the inlet) and it was run using normal sulfur fuel.
Ex #11: This run was a repeat of Ex #10 with CSF #4 having its Pt-enriched end as the inlet, but also with DOC #2 (Pt loading level 176 g/m³ (5.0 g/ft³)) mounted upstream of the CSF in the exhaust. This sample configuration is an example of this invention and it was run using normal sulfur fuel.
Ex #12: This run, like Ex #10, was an evaluation of CSF #4 alone. However, for this run CSF #7 was mounted with its Pt-enriched end in the down stream position (as the outlet) or in reverse flow of that used for Ex #10. This sample configuration is an example of this invention and was run using normal sulfur fuel.
Comp #13: This run was an evaluation of CSF #7 alone. This filter was catalyzed with Pt/CeO₂/ZrO₂ like Ex CSF #5, but in this case the Pt loading level was 7062 g/m³ (200 g/ft³). This sample is an example of this invention and was run using normal; sulfur fuel.

The BPT results for these 13 runs are given in Table III, below. This shows the BPT achieved (deg C) at each of the engine speeds (1300, 1700 & 2100 rpm) used for the individual run. Selected results are also shown in graphical form in Figure 4, attached.

**Table III -**

| Soot Filter Regeneration Performance, Balance Point Temperatures Measurements on 10 Liter, Pre-Euro I Diesel Engine | | | | | |
|---|---|---|---|---|---|
| Run No. | Test Case Description | Balance Point Temperature (deg C) | | | Comment |
| | | 1300 RPM | 1700 RPM | 2100 RPM | |
| C1 | Cat #1 + SF #1 (Control) | 340 | 373 | 422 | Prior Art, ulS Fuel |
| C2 | Cat #1 + SF #1 (Control | 357 | 417 | 458 | Prior Art, nS Fuel |
| C3 | CSF #2 | 418. | 448 | N/a | |
| E4 | DOC #3+CSF #2 | 359 | 421 | N/a | |
| E5 | DOC #2+CSF #2 | 356 | 403 | 452 | |
| C6 | CSF #3 | 367 | 427 | 437 | |
| E7 | CSF #5 | 351 | 391 | 433 | |
| E8 | DOC #2+CSF #5 | 334 | 361 | 428 | |
| E9 | CSF #6 | 351 | 401 | 445 | Pt Washcoat on Upstream 10cm (4 inches) |
| E10 | CSF #4 | 349 | 385 | 437 | Pt Concentration on Inlet 10cm (4 inches) |
| E11 | DOC #2+CSF #4 | 339 | 378 | 428 | |
| E12 | CSF #4 (Reverse) | 338 | 377 | 409 | Pt Concentration on Outlet 10cm (4 inches) |
| E13 | CSF #7 | 373 | 384 | 413 | |
| Note: All runs made using normal sulfur (nS, ca. 350 ppm S) fuel unless noted. | | | | | |

It can be seen that the balance point temperature results for each run (Table III) show a trend toward higher BPT with increasing speed. This behavior can be seen as trend lines in Figure 4. This is a general feature of all the results and demonstrates the effect of total exhaust mass flow rate and the particulate accumulation rate on the BPT. Each run's catalyst configuration and volume is constant, thus a higher temperature is required for the soot burning rate to keep pace with the higher exhaust rates. Based on these data the performance of the examples for the individual runs can be ranked and the lower the BPT, the better the example.

In Comp #1 the Comparative Example (Comp) exhibited very good BPT performance of 340°C, 373°C and 422°C at 1300, 1700 and 2100 RPM, respectively, with the engine running on ultra low sulfur fuel. When in Comp #2 the fuel was changed to the normal sulfur level the BPT performance suffered and increased to 357°C, 417°C and 458°C, respectively.

In Comp #3 the CSF #5 with low Pt load 176 g/cm³ (5.0 g/ft³)) showed rather poor performance with BPT's of 418°C and 448°C at 1300 and 1700 RPM, respectively. The BPT for this sample at 2100 RPM was above the maximum exhaust temperature of the engine ca. 460°C. a CSF of this type with this Pt loading level is capable of giving acceptable BPT's and passive regeneration on newer engines having lower particulate emissions levels, but on this older, higher emissions engine the level of performance of Comp #3 would probably not be acceptable.

Improved performance with this type of CSF was achieved with an increase in the Pt loading level (1765 g/m³ (50 g/ft³), CSF #3) as shown in Comp #6 compared to Comp #3 (367°C, 427°C & 437°C, respectively). These BPT's were only slightly higher than for Comp examples when it was also run on normal sulfur fuel in Comp #2. Thus, Pt loading level on the soot filter substrate is an important variable and increasing can result in improved BPT performance.

In Ex #4 the placement of DOC #3 (17.6g/m³ (0.5 g/ft³)Pt) upstream of CSF #2 resulted in BPT's of 359°C and 421°C at 1300 and 1700 RPM, respectively. For this configuration the BPT at 2100 RPM was above the maximum engine exhaust temperature, ca. 460°C. However, the example of Ex #4 constituted an improvement of 59°C and 27°C lower BPT at 1300 and 1700 RPM, respectively, relative to CSF #2 alone. This example of the invention supports the concept that the total particulate matter (TPM) reduction afforded by the DOC enhances the soot burning performance of the CSF. Furthermore, the BPT's achieved for this configuration of the invention in Ex #4 at 1300 and 1700 RPM were comparable with those of Comp #2, which also included Cat #1 and was run on normal sulfur fuel. It should also be noted that the BPT of Comp #2 at 2100 RPM was 458°C, which is very near the maximum exhaust temperature (about 460°C) of the engine.

Ex #5 used the same configuration as Ex #4, except that the Pt loading level on DOC #2 was 176g/m³ (5.0 g/ft³) instead of 17.6g/m³ (0.5 g/ft³). The BPT's achieved with this example of the invention in Ex #5 were 356°C, 403°C and 452°C, respectively. These results were slightly better that for Ex #4 at 1300 and 1700 RPM where BPT's were achieved. However, the increase in Pt loading on the DOC at these relatively low Pt loading levels had only a moderate effect on lowering the BPT.

Ex's #4 and #5 demonstrate that improved BPT performance can be achieved by placing a DOC in front of a CSF, and this improvement can be achieved with very low precious metal loading. Furthermore, the performance of this configuration of the invention could be expected to be even better on newer, lower emissions diesel engines.

Ex #7, an example of this invention (CSF #5) having an improved catalyst formulation (Pt/CeO2/ZrO2) achieved BPT's of 351°C, 391°C and 433°C, respectively. This represented a significant improvement in BPT performance relative to CSF #3 (Comp #6) which had the same Pt loading level (1765 g/m³ (50 g/ft³)) but did not contain ZrO₂. The BPT's were with CSF #5 were lowered by 16°C, 36°C and 4°C, respectively. CSF #5, run on normal sulfur fuel, was also substantially better than the prior art (control) example, also run on normal sulfur fuel (Comp #2). Furthermore, the BPT performance of CSF #5 was only slightly higher than that of the Comp #1 when run using ultra low sulfur fuel (Run #1).

Ex #13 (CSF #7) which had the same improved catalyst formulation as CSF #5 (Pt/CeO₂/ZrO₂), but with a Pt loading level of 7062 g/m³ (200 g/ft³) was evaluated. For this run BPT's of 373°C, 384°C and 413°C, respectively, were obtained. Relative to CSF #5 (Ex #7) this performance was poorer at 1300 RPM , slightly better at 1700 RPM and with ca. 20°C advantage at 2100 RPM. This shows that a large Pt loading level increase (e.g., 1765g/m³ to 7062g/m³ (50 g/ft³ to 200 g/ft³)) does not enhance BPT performance substantially.

Ex #8, also an example of this invention, with DOC #2 176 g/m³ (5.0 g/ft³) upstream of CSF #5 BPT's of 334°C, 361°C and 428°C, respectively, were achieved. This constituted a further improvement relative to CSF #5 alone and the BPT's were lowered by 17°C, 30°C and 5°C, respectively, relative to Ex #7. This shows the combined effects of the upstream DOC and an improved catalyst on the soot filter. Furthermore, The BPT performance for the configuration in Ex #8 evaluated on normal sulfur fuel constituted an improvement relative to Comp #1.

In Ex #9 the BPT results for CSF #6 were obtained. This soot filter which contained a washcoated length of 10cm (4 inches) at one end that was run upstream, at the inlet to the soot filter, achieved BPT's of 351°C, 401°C and 445°C, respectively. This performance was better than that of CSF #2 (Comp #3) and CSF #2 with DOC's mounted upstream (Ex's #4 & 5). However, it was no better and slightly poorer than CSF #5, even with a slightly higher Pt loading level over the upstream 10cm (4 inches) (2316g/m³ vs. 1765g/m³ (65.6 g/ft³ vs 50 g/ft³)). This might have been due to the washcoat thickness which covered 10cm (4 inches) length of one end of the soot filter. This washcoat covered the porous ceramic walls of this area of the soot filter substrate which likely resulted in impeded exhaust flow. This in turn effectively reduced the filtration area (volume) of the soot filter resulting in higher BPT's.

Ex #10 the BPT results for CSF #4 alone, were obtained. This soot filter, which had an enriched Pt loading on 10cm (4 inches) of length of one end was run with the Pt-enriched end upstream, at the inlet.. The BPT's for this configuration were 349°C, 385°C and 437°C, respectively. This performance was comparable with that of CSF #5 in Ex #7. This shows that the Pt loading on the CSF can be placed at the inlet or spread more uniformly throughout the volume of the soot filter substrate and obtain the same results. In an additional run of CSF #4, ultra low sulfur fuel was used in place of normal sulfur fuel and the BPT results were comparable, thus showing that the CSF's of this invention are not sensitive to the sulfur level in the fuel, unlike Comp's #1 & #2.

Ex #11, DOC #2 (176 g/m³ (5.0 g/ft₃ Pt)) was mounted upstream of CSF #4. This configuration, an example of this invention, gave BPT's of 339°C, 378°C and 428°C, respectively. This was an improvement relative to CSF #4 alone and BPT's were 10°C, 7°C and 9°C lower, respectively. Furthermore, the performance of this configuration in Ex #11 using normal sulfur fuel was comparable with Comp #1, using ultra low sulfur fuel.

Ex #12, CSF #4 alone was run in reverse flow orientation with respect to the exhaust compared with the way it was evaluated in Ex #10. In this configuration, an exam le of this invention, the end of the soot filter with Pt-enriched 10cm (4") length was mounted down stream, at the outlet. The BPT's obtained in Ex #12 were 338°C, 377°C and 409°C, respectively. This constituted an improvement in performance compared to the case when CSF #4 was run with its Pt-enriched end mounted upstream, at the inlet, (Ex #10). This was a surprise and demonstrated that the placement of the Pt on the soot filter substrate could be important to performance and that distributing the Pt on the outlet end of the filter substrate provided an advantage. Furthermore, the performance of CSF #4 mounted in this orientation and using normal sulfur fuel was comparable with Comp #1.

## Claims

1. An apparatus comprising:
a diesel engine (2) having an exhaust outlet (3);
a catalyzed filter (4) in communication with the exhaust outlet (3), the catalyzed filter (4) comprising a first catalyst, the first catalyst comprising:
a first platinum group metal; and
a first cerium component; and **characterized by**
a second catalyst (6) in communication with the first catalyst (4), the second catalyst (6) comprising:
a second cerium component.

2. The apparatus as recited in claim 1 wherein the first catalyst (4) further comprises a first zirconium component.

3. The apparatus as recited in claims 1 or 2 wherein the second catalyst (6) is located between the engine outlet and the first catalyst (4).

4. The apparatus as recited in claim 3 wherein the second catalyst (6) is supported on a separate substrate than the catalyzed filter (4).

5. The apparatus as recited in claim 3 wherein the second catalyst is located at the catalyzed filter (4).

6. The apparatus as recited in claim 3 wherein the catalyzed filter (4) has an axial length extending from an upstream filter end to a downstream filter end, and the second catalyst is located for at least part of the axial length from the upstream end.

7. The apparatus as recited in claim 6 wherein the second catalyst is located for from 0.635 to 20.32 cm (0.25 to 8 inches) from the upstream end.

8. The apparatus as recited in claim 7 wherein the second catalyst is located for from 1.524 to 12.7 cm (0.5 to 5 inches) from the upstream end.

9. The apparatus as recited in claims 1 or 2 wherein the second catalyst (6) is located downstream of the first catalyst (4).

10. The apparatus as recited in claim 9 wherein the second catalyst (6) is supported on a separate substrate than the catalyzed filter (4).

11. The apparatus as recited in claim 9 wherein the second catalyst is located at the catalyzed filter (4).

12. The apparatus as recited in claim 11 wherein the catalyzed filter (4) has an axial length extending from an upstream filter end to a downstream filter end, and the second catalyst (6) is located for at least part of the axial length from the downstream end.

13. The apparatus as recited in claim 12 wherein the second catalyst (6) is located for from 0.635 to 20.32 cm (0.25 to 8 inches) from the downstream end.

14. The apparatus as recited in claim 7 or claim 13 wherein there is a gap between the axial length (56) in which the second catalyst is located and the axial length (58) in which the first catalyst is located.

15. The apparatus as recited in claim 14 wherein the second catalyst is located for from 1.524 to 12.7 cm (0.5 to 5 inches) from the downstream end.

16. The apparatus as recited in claims 1 or 2 wherein the second catalyst comprises a second catalyst composition which comprises a second metal oxide selected from silica, alumina, titania and zirconia.

17. The apparatus as recited in claim 16 wherein the second catalyst composition comprises a catalytic material comprising at least one second metal oxide selected from silica, alumina, titania, zirconia, silica-alumina and ceria-zirconia.

18. The apparatus as recited in claim 17 wherein the second cerium component is bulk ceria having a BET surface area of at least about 10 m²/g and the second metal oxide is a bulk metal oxide having a BET surface area of at least about 10 m²/g.

19. The apparatus as recited in claim 18 wherein the second catalyst composition comprises ceria and a metal oxide in a weight ratio of from 5:95 to 95:5.

20. The apparatus as recited in claim 18 wherein the second catalyst (6) comprises at least one second platinum group metal component.

21. The apparatus as recited in claim 20 wherein the second platinum group component is selected from platinum, palladium, and rhodium components.

22. The apparatus as recited in claim 21 wherein the second platinum group components are present in an amount of from 3.53 to 7062.92 g/m³ (0.1 to 200 g/ft³) based on the weight of the platinum group metal of the platinum group component.

23. The apparatus as recited in claim 22 wherein the second platinum group component is a platinum component in an amount from 3.53 to 529.72 g/m³ (0.1 to 15 g/ft³) based on the weight of the platinum group metal of the platinum group component.

24. The apparatus as recited in claim 23 wherein the second platinum component is in an amount from 3.53 to 176.57 g/m³ (0.1 to 5 g/ft³) based on the weight of the platinum group metal of the platinum group component.

25. The apparatus as recited in claim 23 wherein the second platinum group component is a second platinum component in an amount from 3.53 to 17.66 g/m³ (0.1 to 0.5 g/ft³) based on the weight of the platinum group metal of the platinum group component.

26. The apparatus as recited in claims 1 or 2 wherein the first catalyst (4) comprises a first catalyst composition which comprises a first metal oxide selected from silica, alumina, titania and zirconia.

27. The apparatus as recited in claim 26 wherein the first catalyst composition comprises at least one first metal oxide selected from silica, alumina, titania, zirconia, silica-alumina and ceria-zirconia.

28. The apparatus as recited in claim 27 wherein the first cerium component is bulk ceria having a BET surface area of at least 10 m²/g and the first metal oxide is a bulk metal oxide having a BET surface area of at least 10 m²/g.

29. The apparatus as recited in claim 28 wherein the first catalyst composition comprises ceria and metal oxide in a weight ratio of from 5:95 to 95:5.

30. The apparatus as recited in claim 26 wherein the second catalyst composition comprises a second platinum group component selected from platinum, palladium, and rhodium components.

31. The apparatus as recited in claim 30 wherein the second platinum group components are present in an amount of from 3.53 to 7062.92 g/m³ (0.1 to 200 g/ft³) based on the weight of the platinum group metal of the platinum group component

32. The apparatus as recited in claims 1 or 2 wherein the catalyzed soot filter (4) comprises a wall flow honeycomb substrate.

33. The apparatus as recited in claims 1 or 2 wherein the second catalyst (6) is supported on a flow through honeycomb substrate.

## Patentansprüche

1. Vorrichtung umfassend:
einen Dieselmotor (2) mit einem Abgasauslaß (3);
einen katalysierten Filter (4) in Verbindung mit dem Abgasauslaß (3), wobei der katalysierten Filter (4) einen ersten Katalysator umfasst, wobei der erste Katalysator umfasst:
ein erstes Platinmetall,
einen ersten Cerbestandteil; und **gekennzeichnet ist, durch**
einen zweiten Katalysator (6) in Verbindung mit dem ersten Katalysator (4), wobei der zweite Katalysator (6) umfasst:
einen zweiten Cerbestandteil.

2. Vorrichtung nach Anspruch 1, wobei der erste Katalysator (4) des weiteren einen ersten Zirkoniumbestandteil enthält.

3. Vorrichtung nach Anspruch 1 oder 2, wobei der zweite Katalysator (6) zwischen dem Motorauslaß und dem ersten Katalysator (4) angeordnet ist.

4. Vorrichtung nach Anspruch 3, wobei der zweite Katalysator (6) von einem getrennten bzw. anderen Substrat getragen wird, als der katalysierte Filter (4).

5. Vorrichtung nach Anspruch 3, wobei der zweite Katalysator an dem katalysierten Filter (4) angeordnet ist.

6. Vorrichtung nach Anspruch 3, wobei der katalysierte Filter (4) eine axiale Länge aufweist, welche sich von einem vorgeschalteten Filterende bis zu einem nachgeschalteten Filterende erstreckt, und wobei sich der zweite Katalysator über wenigstens einen Teil der axialen Länge des vorgeschalteten Endes erstreckt.

7. Vorrichtung nach Anspruch 6, wobei der zweite Katalysator für zwischen 0,635 bis 20,32 cm (0,25 bis 8 inch) von dem vorgeschalteten Ende angeordnet ist.

8. Vorrichtung nach Anspruch 6, wobei der zweite Katalysator für zwischen 1,524 bis 12,7 cm (0,5 bis 5 inch) von dem vorgeschalteten Ende angeordnet ist.

9. Vorrichtung nach Anspruch 1 oder 2, wobei der zweite Katalysator (6) dem ersten Katalysator (4) nachfolgend angeordnet ist.

10. Vorrichtung nach Anspruch 9, wobei der zweite Katalysator von einem getrennten bzw. anderen Substrat getragen wird als der katalysierte Filter(4).

11. Vorrichtung nach Anspruch 9, wobei der zweite Katalysator an dem katalysierten Filter (4) angeordnet ist.

12. Vorrichtung nach Anspruch 11, wobei der katalysierte Filter (4) eine axiale Länge aufweist, welche sich von einem vorgeschalteten Filterende bis zu einem nachgeschalteten Filterende erstreckt, und wobei sich der zweite Katalysator über wenigstens einem Teil der axialen Länge des vorgeschalteten Endes erstreckt.

13. Vorrichtung nach Anspruch 12, wobei der zweite Katalysator für zwischen 0,635 bis 20,32 cm (0,25 bis 8 inch) von dem vorgeschalteten Ende angeordnet ist.

14. Vorrichtung nach Anspruch 7 oder 13, wobei eine Spalte zwischen der axialen Länge (56), in welcher der zweite Katalysator angeordnet ist und der zweiten axialen Länge (58), in welcher der erste Katalysator angeordnet ist, vorhanden ist

15. Vorrichtung nach Anspruch 14, wobei der zweite Katalysator für zwischen 1,524 bis 12,7 cm (0,5 bis 5 inch) von dem vorgeschalteten Ende angeordnet ist.

16. Vorrichtung nach Anspruch 1 oder 2, wobei der zweite Katalysator eine zweite Katalysatorzusammensetzung umfasst, welche ein zweites Metalloxid umfasst, gewählt aus Siliziumdioxid, Aluminiumoxid, Titanoxid und Zirkonoxid.

17. Vorrichtung nach Anspruch 16, wobei die zweite Katalysatorzusammensetzung ein katalytisches Material umfasst, umfassend wenigstens ein zweites Metalloxid, gewählt aus Siliziumdioxid, Aluminiumoxid, Titanoxid und Zirkonoxid, Siliziumdioxid-Aluminiumoxid und Cerdioxid-Zirkonoxid.

18. Vorrichtung nach Anspruch 17, wobei der zweite Cerbestandteil Schüttgut-Cerdioxid ist, mit einer BET-Oberfläche von wenigstens ungefähr 10m²/g und wobei das zweite Metalloxid ein Schüttgut-Metalloxid ist, mit einer BET-Obertläche von wenigstens ungefähr 10m²/g.

19. Vorrichtung nach Anspruch 18, wobei die zweite Katalysatorzusammensetzung Cerdioxid und ein Metalloxid in einem Gewichtsverhältnis von 5:95 bis 95:5 umfasst.

20. Vorrichtung nach Anspruch 18, wobei der zweite Katalysator (6) wenigstens einen zweiten Platinmetallbestandteil umfasst.

21. Vorrichtung nach Anspruch 20, wobei der zweite Platinmetallbestandteil gewählt ist aus Platin-, Palladium- und Rhodiumbestandteilen.

22. Vorrichtung nach Anspruch 21, wobei die zweiten Platinmetallbestandteile in einer Menge von 3,35 bis 7062,92 g/m³ (0,1 bis 200 g/ft³) bezogen auf das Gewicht des Platinmetalls des Platinmetallbestandteils vorhanden sind.

23. Vorrichtung nach Anspruch 22, wobei der zweite Platinmetallbestandteil ein Platinbestandteil ist, in einer Menge von 3,35 bis 529,72 g/m³ (0,1 bis 15 g/ft³) bezogen auf das Gewicht des Platinmetalls des Platinmetallbestandteils.

24. Vorrichtung nach Anspruch 23, wobei der zweite Platinmetallbestandteil in einer Menge von 3,35 bis 176,57 g/m³ (0,1 bis 5 g/ft³) bezogen auf das Gewicht des Platinmetalls des Platinmetallbestandteils vorhanden ist.

25. Vorrichtung nach Anspruch 23, wobei der zweite Platinmetallbestandteil ein Platinbestandteil ist in einer Menge von 3,35 bis 17,66 g/m³ (0,1 bis 0,5 g/ft³) bezogen auf das Gewicht des Platinmetalls des Platinmetallbestandteils.

26. Vorrichtung nach Anspruch 1 oder 2, wobei der erste Katalysator (4) eine erste Katalysatorzusammensetzung umfasst, welche ein erstes Metalloxid umfasst, gewählt aus Siliziumdioxid, Aluminiumoxid, Titanoxid und Zirkonoxid.

27. Vorrichtung nach Anspruch 26, wobei die erste Katalysatorzusammensetzung wenigstens ein erstes Metalloxid umfasst, gewählt aus Siliziumdioxid, Aluminiumoxid, Titanoxid und Zirkonoxid, Siliziumdioxid-Aluminiumoxid und Cerdioxid-Zirkonoxid.

28. Vorrichtung nach Anspruch 27, wobei der erste Cerbestandteil Schüttgut-Cerdioxid ist, mit einer BET-Oberfläche von wenigstens ungefähr 10m²/g und wobei das erste Metalloxid ein Schüttgut-Metalloxid ist, mit einer BET-Oberfläche von wenigstens ungefähr 10m²/g.

29. Vorrichtung nach Anspruch 28, wobei die erste Katalysatorzusammensetzung Cerdioxid und ein Metalloxid in einem Gewichtsverhältnis von 5:95 bis 95:5 umfasst.

30. Vorrichtung nach Anspruch 26, wobei die zweite Katalysatorzusammensetzung wenigstens einen zweiten Platinmetallbestandteil umfasst, gewählt aus Platin-, Palladium- und Rhodiumbestandteilen.

31. Vorrichtung nach Anspruch 30, wobei die zweiten Platinmetallbestandteile in einer Menge von 3,35 bis 7062,92 g/m³ (0,1 bis 200 g/ft³) bezogen auf das Gewicht des Platinmetalls des Platinmetallbestandteils vorhanden sind.

32. Vorrichtung nach Anspruch 1 oder 2, wobei der katalysierte Rußfilter (4) ein Wanddurchflusswabenkörpersubstrat umfasst.

33. Vorrichtung nach Anspruch 1 oder 2, wobei der zweite Katalysator auf einem Durchfluss durch das Wabenkörpersubstrat getragen wird.

## Revendications

1. Appareil comprenant :
un moteur diesel (2) ayant un orifice d'échappement (3) ;
un filtre catalysé (4) en communication avec l'orifice d'échappement (3), le filtre catalysé comprenant un premier catalyseur, le premier catalyseur comprenant :
un premier métal du groupe du platine ; et
un premier composant cérium ; et **caractérisé par**
un second catalyseur (6) en communication avec le premier catalyseur (4), le second catalyseur (6) comprenant :
un second composant du cérium.

2. Appareil selon la revendication 1, dans lequel le premier catalyseur (4) comprend en outre un premier composant zirconium.

3. Appareil selon les revendications 1 ou 2, dans lequel le second catalyseur (6) est situé entre l'orifice d'échappement du moteur et le premier catalyseur (4) .

4. Appareil selon la revendication 3, dans lequel le second catalyseur (6) est supporté sur un substrat distinct de celui du filtre catalysé (4).

5. Appareil selon la revendication 3, dans lequel le second catalyseur est situé au niveau du filtre catalysé (4).

6. Appareil selon la revendication 3, dans lequel le filtre catalysé (4) a une longueur axiale s'étendant d'une extrémité amont du filtre à une extrémité aval du filtre, et le second catalyseur est situé pour au moins une partie de la longueur axiale à partir de l'extrémité amont.

7. Appareil selon la revendication 6, dans lequel le second catalyseur est situé de 0,635 à 20,32 cm (0,25 à 8 pouces) de l'extrémité amont.

8. Appareil selon la revendication 7, dans lequel le second catalyseur est situé de 1,524 à 12,7 cm (0,5 à 5 pouces) de l'extrémité amont.

9. Appareil selon les revendications 1 ou 2, dans lequel le second catalyseur (6) est situé en aval du premier catalyseur (4).

10. Appareil selon la revendication 9, dans lequel le second catalyseur (6) est supporté sur un substrat distinct de celui du filtre catalysé (4).

11. Appareil selon la revendication 9, dans lequel le second catalyseur est situé au niveau du filtre catalysé (4) .

12. Appareil selon la revendication 11, dans lequel le filtre catalysé (4) a une longueur axiale s'étendant d'une extrémité amont du filtre à une extrémité aval du filtre, et le second catalyseur (6) est situé pour au moins une partie de la longueur axiale à partir de l'extrémité amont.

13. Appareil selon la revendication 12, dans lequel le second catalyseur (6) est situé de 0,635 à 20,32 cm (0,25 à 8 pouces) de l'extrémité aval.

14. Appareil selon la revendication 7 ou la revendication 13, dans lequel il existe un intervalle entre la longueur axiale (56) dans laquelle est situé le second catalyseur et la longueur axiale (58) dans laquelle est situé le premier catalyseur.

15. Appareil selon la revendication 14, dans lequel le second catalyseur est situé de 1,524 à 12,7 cm (0,5 à 5 pouces) de l'extrémité aval.

16. Appareil selon les revendications 1 ou 2, dans lequel le second catalyseur comprend une seconde composition de catalyseur qui comprend un second oxyde métallique choisi parmi la silice, l'alumine, l'oxyde de titane et la zircone.

17. Appareil selon la revendication 16, dans lequel la seconde composition de catalyseur comprend un matériau catalytique comprenant au moins un second oxyde métallique choisi parmi la silice, l'alumine, l'oxyde de titane et la zircone, la silice-alumine et l'oxyde de cérium-zircone.

18. Appareil selon la revendication 17, dans lequel le second composant cérium est l'oxyde de cérium massif ayant une surface spécifique BET d'au moins environ 10 m²/g et le second oxyde métallique est un oxyde métallique massif ayant une surface spécifique BET d'au moins environ 10 m²/g.

19. Appareil selon la revendication 18, dans lequel la seconde composition de catalyseur comprend de l'oxyde de cérium et un oxyde métallique selon un rapport pondéral de 5:95 à 95:5.

20. Appareil selon la revendication 18, dans lequel le second catalyseur (6) comprend au moins un second composant métallique du groupe du platine.

21. Appareil selon la revendication 20, dans lequel le second composant du groupe du platine est choisi parmi les composants platine, palladium et rhodium.

22. Appareil selon la revendication 21, dans lequel les seconds composants du groupe du platine sont présents en une quantité de 3,53 à 7062,92 g/m³ (0,1 à 200 g/pied³) sur la base du poids du métal du groupe du platine du composant du groupe du platine.

23. Appareil selon la revendication 22, dans lequel le second composant du groupe du platine est un composant platine en une quantité de 3,53 à 529,72 g/m³ (0,1 à 15 g/pied³) sur la base du poids du métal du groupe du platine du composant du groupe du platine.

24. Appareil selon la revendication 23, dans lequel le second composant platine est présent en une quantité de 3,53 à 176,57 g/m³ (0,1 à 5 g/pied³) sur la base du poids du métal du groupe du platine du composant du groupe du platine.

25. Appareil selon la revendication 23, dans lequel le second composant du groupe du platine est un second composant platine en une quantité de 3,53 à 17,66 g/m³ (0,1 à 0,5 g/pied³) sur la base du poids du métal du groupe du platine du composant du groupe du platine.

26. Appareil selon les revendications 1 ou 2, dans lequel le premier catalyseur (4) comprend une première composition de catalyseur qui comprend un premier oxyde métallique choisi parmi la silice, l'alumine, l'oxyde de titane et la zircone.

27. Appareil selon la revendication 26, dans lequel la première composition de catalyseur comprend au moins un premier oxyde métallique choisi parmi la silice, l'alumine, l'oxyde de titane, la zircone, la silice-alumine et l'oxyde de cérium-zircone.

28. Appareil selon la revendication 27, dans lequel le premier composant cérium est de l'oxyde de cérium massif ayant une surface spécifique BET d'au moins 10 m²/g et le premier oxyde métallique est un oxyde métallique massif ayant une surface spécifique BET d'au moins 10 m²/g.

29. Appareil selon la revendication 28, dans lequel la première composition de catalyseur comprend de l'oxyde de cérium et de l'oxyde métallique selon un rapport pondéral de 5:95 à 95:5.

30. Appareil selon la revendication 26, dans lequel la seconde composition de catalyseur comprend un second composant du groupe du platine choisi parmi les composants platine, palladium et rhodium.

31. Appareil selon la revendication 30, dans lequel les seconds composants du groupe du platine sont présents en une quantité de 3,53 à 7062,92 g/m³ (0,1 à 200 g/pied³) sur la base du poids du métal du groupe du platine du composant du groupe du platine.

32. Appareil selon les revendications 1 ou 2, dans lequel le filtre à suie catalysé (4) comprend un substrat en nid d'abeille à écoulement de paroi.

33. Appareil selon les revendications 1 ou 2, dans lequel le second catalyseur (6) est supporté sur un substrat en nid d'abeille à écoulement continu.
